(19) Europäisches Patentamt
European Patent Office
Office européen des brevets

(11) **EP 4 488 419 A1**

(12) **EUROPEAN PATENT APPLICATION**
published in accordance with Art. 153(4) EPC

(43) Date of publication:
**08.01.2025 Bulletin 2025/02**

(21) Application number: 23760051.5

(22) Date of filing: **22.02.2023**

(51) International Patent Classification (IPC):
*C25B 11/085* [(2021.01)]    *B01J 27/24* [(2006.01)]
*C01B 32/40* [(2017.01)]    *C25B 1/23* [(2021.01)]
*C25B 9/23* [(2021.01)]    *C25B 11/02* [(2021.01)]
*C25B 11/054* [(2021.01)]    *C25B 11/065* [(2021.01)]
*C25B 13/04* [(2021.01)]

(52) Cooperative Patent Classification (CPC):
**B01J 27/24; C01B 32/40; C25B 1/23; C25B 9/23;
C25B 11/02; C25B 11/054; C25B 11/065;
C25B 11/085; C25B 13/04;** Y02E 60/50

(86) International application number:
**PCT/JP2023/006499**

(87) International publication number:
**WO 2023/163052 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 JP 2022029810**

(71) Applicants:
• **OSAKA UNIVERSITY
Suita-shi
Osaka 565-0871 (JP)**
• **Idemitsu Kosan Co.,Ltd.
Tokyo 100-8321 (JP)**

(72) Inventors:
• **KAMIYA, Kazuhide
Suita-shi, Osaka 565-0871 (JP)**
• **SUGIMOTO, Rino
Tokyo 100-8321 (JP)**
• **JIA, Qingxin
Tokyo 100-8321 (JP)**
• **KANEKO, Hiroyuki
Tokyo 100-8321 (JP)**

(74) Representative: **Gille Hrabal
Partnerschaftsgesellschaft mbB
Patentanwälte
Brucknerstraße 20
40593 Düsseldorf (DE)**

(54) **CATALYST AND PRODUCTION METHOD FOR SAME, CATHODE, ION EXCHANGE MEMBRANE ELECTRODE ASSEMBLY, AND SOLID ELECTROLYTE ELECTROLYSIS DEVICE**

(57) A catalyst that has a high electrolytic activity and a high $CO_2$ reduction reaction rate and a method of producing the same, a cathode, an ion exchange membrane-electrode assembly, and a solid electrolyte electrolysis apparatus are provided. The catalyst includes a metal ion selected from the group consisting of a copper ion, a nickel ion, an iron ion, a cobalt ion, a zinc ion, a manganese ion, a molybdenum ion, and an aluminum ion, a nitrogen-containing compound, and a carrier containing carbon having a primary particle diameter of 5 to 200 nm, the metal ion is coordinated to the nitrogen atom on the nitrogen-containing compound, the catalyst has a content of the metal ion coordinated to the nitrogen atom of 0.7% by mass or more, and the catalyst has a particle diameter of 10 nm to 50 μm.

Fig. 1

EP 4 488 419 A1

**Description**

Technical Field

The technique of the present disclosure relates to a catalyst and a method of producing the same, a cathode, an ion exchange membrane-electrode assembly, and a solid electrolyte electrolysis apparatus.

Background Art

Carbon dioxide is emitted when energy is extracted from a fossil fuel or the like. The increase of the concentration of carbon dioxide in the atmosphere is said to be one of the causes of the global warming. Carbon dioxide is an extremely stable substance, and therefore there has been substantially no way to use. However, in view of the demand of the times where the global warming becomes more serious, a new technology is needed to convert carbon dioxide into other substances and to recycle as a resource again. For example, a carbon dioxide reduction apparatus capable of directly reducing carbon dioxide in gaseous state is being developed.

In the carbon dioxide reduction apparatuses, a polymer electrolyte electrolysis apparatus is receiving attention since carbon dioxide in gaseous phase can be directly reduced, and the use of a polymer electrolyte in the form of thin membrane can sufficiently decrease the migration resistance of ions. The cathode for reducing carbon dioxide generally contains a mixture of catalyst fine particles, a conductive carrier, and an ion exchange resin, and these components have been variously studied.

For example, NPL 1 describes a nitrogen-containing carbonaceous material supported on carbon, having a metal coordinated to the nitrogen atom. NPL 2 describes that CO can be produced with high selectivity through $CO_2$ electrolytic reduction with a nitrogen-containing carbonaceous material that is synthesized in such a manner that nickel chloride, pentaethylenehexamine, and graphene oxide are dispersed in ethanol, and after evaporating the solvent, baked at 900°C for 45 seconds.

Citation List

Non-patent Literatures

NPL 1: Kun Jiang, Samira Siahrostami, Tingting Zheng, Yongfeng Hu, Sooyeon Hwang, Eli Stavitski, Yande Peng, James Dynes, Mehash Gangisetty, Dong Su, Klaus Attenkofer and Haotian Wang, Energy Environ. Sci. 2018, 11, 893-903
NPL 2: Panpan Su, Kazuyuki Iwase, Shuji Nakanishi, Kazuhito Hashimoto, and Kazuhide Kamiya, small 2016, 12, 44, 6083-6089

Summary of Invention

Problem to be solved

However, the catalysts described in NPLs 1 and 2 have a low electrolytic activity and a low $CO_2$ reduction reaction rate.

The technique of the present disclosure is developed in view of the aforementioned circumstances, and a problem to be solved by the technique of the present disclosure is to provide a catalyst, a cathode, an ion exchange membrane-electrode assembly, and a solid electrolyte electrolysis apparatus having a high electrolytic activity and a high $CO_2$ reduction reaction rate.

Solution to Problem

<1> A catalyst including

a metal ion selected from the group consisting of a copper ion, a nickel ion, an iron ion, a cobalt ion, a zinc ion, a manganese ion, a molybdenum ion, and an aluminum ion,
a nitrogen-containing compound, and

a carrier containing carbon having a primary particle diameter of 5 to 200 nm,
the metal ion being coordinated to a nitrogen atom on the nitrogen-containing compound,
the catalyst having a content of the metal ion coordinated to the nitrogen atom of 0.7% by mass or more,
the catalyst having a particle diameter of 10 nm to 50 μm.

<2> A cathode including a catalyst layer containing the catalyst according to the item <1>, and a gas diffusion layer.

<3> An ion exchange membrane-electrode assembly including the cathode according to the item <2>, a solid electrolyte, and an anode.

<4> The ion exchange membrane-electrode assembly according to the item <3>, in which the solid electrolyte is an anion exchange membrane.

<5> A solid electrolyte electrolysis apparatus including

the cathode according to the item <2>,
an anode constituting a pair of electrodes with the cathode,
a solid electrolyte intervening between the cathode and the cathode, in a contact state, and
a voltage application unit applying a voltage between the cathode and the anode.

<6> The solid electrolyte electrolysis apparatus according to the item <5>, in which the solid electrolyte is an anion exchange membrane.

<7> A method of producing the catalyst according to the item <1> including

a mixing step of mixing a metal ion selected from the group consisting of a copper ion, a nickel ion, an iron ion, a cobalt ion, a zinc ion, a manganese ion, a molybdenum ion, and an aluminum ion, a nitrogen-containing compound, and a carrier containing carbon having a primary particle diameter of 5 to 200 nm, so as to provide a mixture, and
a baking step of baking the mixture, so as to provide a baked material.

Advantageous Effects of Invention

The technique of the present disclosure can provide a catalyst, a cathode, an ion exchange membrane-electrode assembly, and a solid electrolyte electrolysis apparatus having a high electrolytic activity and a high $CO_2$ reduction reaction rate.

Brief Description of Drawings

Fig. 1 is a schematic illustration showing an ion exchange membrane-electrode assembly that is favorably used in the present embodiment.
Fig. 2 is a schematic illustration showing a solid electrolyte electrolysis apparatus that is favorably used in the present embodiment.

Description of Embodiments

The upper limit values and the lower limit values of the numerical ranges described in the description herein can be optionally combined. For example, in the case where "A to B" and "C to D" are described as numerical ranges, numerical ranges "A to D" and "C to B" are also encompassed in the range of the present disclosure.

The numerical range "lower limit value to upper limit value" described in the description herein means the lower limit value or more and the upper limit value or less unless otherwise indicated.

<Catalyst>

The catalyst according to an embodiment of the present disclosure includes a metal ion selected from the group consisting of a copper ion, a nickel ion, an iron ion, a cobalt ion, a zinc ion, a manganese ion, a molybdenum ion, and an aluminum ion, a nitrogen-containing compound, and a carrier containing carbon having a primary particle diameter of 5 to 200 nm, the metal ion is coordinated to the nitrogen atom on the nitrogen-containing compound, the catalyst has a content of the metal ion coordinated to the nitrogen atom of 0.7% by mass or more, and the catalyst has a particle diameter of 10 nm to 50 μm.

In the catalyst of the present disclosure, the component that exhibits the catalytic action of reduction reaction of carbon dioxide is the metal ion, and in the technique of the present disclosure, a structure including the metal ion coordinated to the nitrogen atom on the nitrogen-containing compound, and the carrier is referred to as a "catalyst".

In the $CO_2$ reduction, the highness of the active site density of electrolytic activity strongly contributes to the $CO_2$ reduction reaction rate. In NPLs 1 and 2, the carrier supporting the metal ion has a large primary particle diameter and thus has a low active site density on the electrode, and thereby the $CO_2$ reduction reaction rate cannot be increased, failing to obtain an excellent electrolytic activity.

On the other hand, in the catalyst according to the embodiment, it is estimated that the primary particle diameter of the carrier supporting the metal ion is as small as 5 to 200 nm, resulting in a high active site density on the electrode, and thereby the $CO_2$ reduction reaction rate can be enhanced, resulting in a high electrolytic activity.

As compared to the ordinary techniques, the catalyst according to the present embodiment can retain a high CO generation Faraday efficiency even using a prolonged period of time, and has excellent durability as a catalyst.

The catalyst, the cathode, the ion exchange membrane-electrode assembly, and the electrolysis apparatus according to the present embodiment will be described below sequentially. First, the metal ion included in the catalyst according to the present embodiment will be described.

[Metal Ion]

The catalyst according to the present embodiment includes, as a catalyst source, a metal ion selected from the group consisting of a copper ion, a nickel ion, an iron ion, a cobalt ion, a zinc ion, a manganese ion, a molybdenum ion, and an aluminum ion. The content of the metal ion coordinated to the nitrogen atom is 0.7% by mass or more.

The metal ion according to the present embodiment has a function of generating at least carbon monoxide through reduction reaction.

It is preferred that the metal ion exists as a monoatomic state, and supported on the carrier according to the present embodiment. The catalyst source existing in a monoatomic state can enhance the activity.

For the $CO_2$ reduction reaction proceeding, gold and silver have been widely used as the catalyst source, but these substances are rare and expensive, and therefore it is preferred to use, as a catalyst replacing gold and silver, an embodiment including an ion of a metal other than gold and silver supported on the carrier through coordination to the nitrogen atom.

In the present disclosure, the active site density means the content (% by mass) of the metal ion coordinated to the nitrogen atom of the nitrogen-containing compound in the catalyst.

The metal of the metal ion according to the present embodiment is selected from the group consisting of copper, nickel, iron, cobalt, zinc, manganese, molybdenum, and aluminum.

Among the above, the metal of the metal ion is preferably nickel, cobalt, iron, copper, zinc, and manganese, more preferably nickel, cobalt, iron, and copper, and further preferably nickel, cobalt, and iron, from the standpoint of the reaction efficiency of the carbon dioxide reduction reaction. The catalyst according to the present embodiment may include one kind of the metal ion, or may contain two or more kinds thereof.

The content of the metal ion coordinated to the nitrogen atom of the nitrogen-containing compound in the catalyst is 0.7% by mass or more. In the case where the content of the metal ion is less than 0.7% by mass, the active site density cannot be enhanced.

The upper limit of the content of the metal ion is not particularly limited, and is preferably less than 50% by mass from the standpoint of further enhancing the active site density. From the same standpoint, the content of the metal ion coordinated to the nitrogen atom in the catalyst is more preferably 0.8 to 15% by mass, and further preferably 0.9 to 10% by mass. The content of the metal ion coordinated to the nitrogen atom can be further decreased, and for example, may be 5.0% by mass or less, may be 2.0% by mass or less, and furthermore may be 1.5% by mass or less. The content of the metal ion coordinated to the nitrogen atom in the catalyst is still further preferably 1.0 to 1.5% by mass.

The content of the metal ion coordinated to the nitrogen atom can be obtained in the following manner.

The content ratio of the metal ion bonded to (coordinated to) the nitrogen atom and the metal fine particles in the catalyst can be measured through X-ray absorption fine structure (XAFS) analysis.

Furthermore, the total metal content in the catalyst including the metal ion coordinated to the nitrogen atom and the metal fine particles can be measured through X-ray fluorescence (XRF) analysis.

The content of the metal ion coordinated to the nitrogen atom can be calculated from the measurement result of the XAFS analysis and the measurement result of the XRF analysis.

For example, in the case where a Ni ion is used as the catalyst source, the content of a Ni ion coordinated to the nitrogen atom can be calculated by multiplying the total Ni content including Ni metal and a Ni ion measured through XRF analysis by the ratio of a Ni ion in the total Ni measured through XAFS analysis.

The metal fine particles do not become active sites, but the metal exists through aggregation therein.

The catalyst according to the present embodiment may contain as a catalyst source inorganic fine particles selected from the group consisting of gold, silver, copper, nickel, iron, cobalt, zinc, chromium, palladium, tin, manganese, aluminum, indium, bismuth, molybdenum, and carbon nitride, and preferably contain as a catalyst source only the metal ion described above.

[Nitrogen-containing Compound]

The nitrogen-containing compound is not particularly limited, and examples thereof include pentaethylenehexamine, tetraethylenepentamine, triethylenepentamine, diethylenetriamine, ethylenediamine, and diethylamine, in which pentaethylenehexamine, tetraethylenepentamine, and triethylenepentamine are preferred, and pentaethylenehexamine and tetraethylenepentamine are more preferred, from the standpoint of enhancing the electrolytic activity.
The content of the nitrogen-containing compound in the catalyst according to the present embodiment is preferably 5 to 75% by mass, more preferably 10 to 60% by mass, and further preferably 20 to 50% by mass, from the standpoint of enhancing the active site density.

[Carrier]

The carrier according to the present embodiment contain carbon, and has a primary particle diameter of 5 to 200 nm.
Carbon generally has conductivity, and therefore the carrier according to the present embodiment is a conductive carrier.
The carrier according to the present embodiment is not limited, as long as being a conductive material that can be used as a gas diffusion layer in an electrode provided in an apparatus for reducing carbon dioxide, and examples thereof include carbon black (such as furnace black, acetylene black, Ketjen black, and medium thermal carbon black), activated carbon, graphite, carbon nanotubes, carbon nanofibers, carbon nanohorns, graphene nanoplatelets, and nanoporous carbon, in which carbon black is preferred from the standpoint of enhancing the active site density.
The carbon black preferably has a primary particle diameter of 10 to 100 nm, more preferably 10 to 50 nm, and further preferably 20 to 50 nm, from the standpoint of enhancing the active site density and enhancing the current density. The primary particle diameter of the carbon black can be measured with a transmission electron microscope. Specifically, 100 particles of the carbon black on an image of a transmission electron microscope (TEM) are measured for the primary particle diameter, and the average value thereof is calculated. The primary particle of carbon black has a nearly true spherical shape having a small aspect ratio, but is not a true sphere. Accordingly, in the primary particle on the TEM image, the maximum one among the line segments connecting two points on the outer contour is measured as the primary particle diameter of the carbon black.
From the same standpoint, the secondary particle diameter of the carbon black (i.e., the particle diameter of the aggregated particles) is preferably small, and carbon black having a large functional group amount is preferred.
The carbon black may be a commercially available product, and examples thereof include Vulcan (registered trade name) XC-72 (available from Cabot Corporation) and BLACKPEARL 2000 (available from Cabot Corporation).
The catalyst according to the present embodiment has a particle diameter of 10 nm to 50 $\mu$m.
In the case where the particle diameter of the catalyst is 50 $\mu$m or less, the active site density is increased to enhance the $CO_2$ reduction reaction rate. In the case where the particle diameter of the catalyst is 10 nm or more, the salt of the electrolyte can be prevented from being deposited from the solid electrolyte, and excellent workability can be obtained.
The particle diameter of the catalyst is preferably 20 nm to 40 $\mu$m, and more preferably 30 nm to 40 $\mu$m, from the standpoint of further enhancing the active site density, and in the case where a catalyst layer is produced with an ionomer described later, from the standpoint of producing a catalyst layer having the catalyst uniformly dispersed in the ionomer by sufficiently mixing with the ionomer.
The particle diameter of the catalyst can be confirmed with a laser diffraction-scattering particle diameter distribution analyzer.
It is preferred that the catalyst according to the present embodiment has a content of the metal ion coordinated to the nitrogen atom of the nitrogen-containing compound in the catalyst of 0.8 to 5.0% by mass, includes as the carrier according to the present embodiment carbon black having a primary particle diameter of 10 to 50 nm, and has a particle diameter of the catalyst of 20 nm to 40 $\mu$m.
A more preferred embodiment of the catalyst according to the present embodiment has a content of the metal ion coordinated to the nitrogen atom of the nitrogen-containing compound in the catalyst of 0.9 to 2.0% by mass, includes as the carrier according to the present embodiment carbon black having a primary particle diameter of 20 to 50 nm, and has a particle diameter of the catalyst of 20 nm to 40 $\mu$m.
A further preferred embodiment of the catalyst according to the present embodiment has a content of the metal ion coordinated to the nitrogen atom of the nitrogen-containing compound in the catalyst of 1.0 to 2.0% by mass, includes as the carrier according to the present embodiment carbon black having a primary particle diameter of 20 to 50 nm, and has a particle diameter of the catalyst of 20 nm to 40 μm.

Additionally, the catalyst with the technique of the present disclosure is preferably coated with an ionomer, which is described later. The ionomer coated on the catalyst facilitates the formation of the ionic conductive channel of the coated catalyst and the solid electrolyte described later, and facilitates the migration of ions formed through the reaction, and thereby the electrolysis efficiency can be enhanced.

[Production Method of Catalyst]

The production method of the catalyst according to the present embodiment is not particularly limited.

Examples thereof include a method of producing the catalyst, including a mixing step of mixing the metal ion, the nitrogen-containing compound, and the carrier containing carbon, so as to provide a mixture, and a baking step of baking the mixture, so as to provide a baked material.

More specifically, examples of the method of producing the catalyst according to the present embodiment include a method of producing the catalyst according to an embodiment of the present disclosure, including a mixing step of mixing a metal ion selected from the group consisting of a copper ion, a nickel ion, an iron ion, a cobalt ion, a zinc ion, a manganese ion, a molybdenum ion, and an aluminum ion, a nitrogen-containing compound, and a carrier containing carbon having a primary particle diameter of 5 to 200 nm, so as to provide a mixture, and a baking step of baking the mixture, so as to provide a baked material.

The method of producing the catalyst according to the present embodiment may further include a rinsing step of rinsing the baked material, and a pulverizing step of pulverizing the baked material.

(Mixing Step)

The metal ion, the nitrogen-containing compound, and the carrier containing carbon used in the mixing step have been described above.

In the mixing step, it is preferred that the metal ion, the nitrogen-containing compound, and the carrier containing carbon are added to an organic solvent represented by ethanol, so as to produce a dispersion liquid. The dispersion liquid may be irradiated with ultrasonic wave for deaeration.

The amount of the metal ion blended is preferably 0.1 to 100 parts by mass, and more preferably 5 to 50 parts by mass, per 100 parts by mass of carbon black.

The amount of the nitrogen-containing compound blended is preferably 5 to 300 parts by mass, and more preferably 20 to 70 parts by mass, per 100 parts by mass of carbon black.

(Baking Step)

The baking step is to bake the mixture obtained in the mixing step.

In baking the mixture, it is preferred that the mixture is placed in a quartz tube, and after purging the interior of the quartz tube with an inert gas, such as argon gas, followed by sealing the quartz tube, the mixture is baked.

The baking temperature is preferably 500 to 1,400°C, more preferably 600 to 1,000°C, and further preferably 750 to 950°C. The baking time is preferably 15 seconds to 10 minutes, more preferably 20 seconds to 5 minutes, and further preferably 30 seconds to 90 seconds.

(Rinsing Step)

The rinsing step is a step of rinsing the baked material obtained in the baking step with water, an inorganic acid, and the like.

Water used may be ion exchange water, pure water, or the like. The inorganic acid used is preferably sulfuric acid. The inorganic acid is preferably 1 to 3 mol/L (hereinafter, mol/L may be referred to as M), and the inorganic acid heated to 60 to 90°C is may also be used.

In the rinsing step, it is preferred that the baked material is rinsed with water, then rinsed with an inorganic acid, and finally rinsed with water again.

(Pulverizing Step)

The pulverizing step is a step of pulverizing the baked material obtained in the baking step, and may be appropriately performed after the baking step, thereby enhancing the active site density of the catalyst.

The pulverizing step may be performed after the rinsing step, and is preferably performed before the rinsing step.

The baked material can be pulverized with alumina balls. The diameter of the alumina balls is preferably 0.05 to 5 mm, and the pulverization condition is preferably 400 to 1,100 rpm and 2 minutes to 20 hours.

<Cathode>

The cathode according to the present embodiment includes a catalyst layer containing the catalyst according to the present embodiment described above, and a gas diffusion layer.

The present embodiment has a high electrolytic activity and a high $CO_2$ reduction reaction rate due to the catalyst layer containing the catalyst according to the present embodiment.

[Catalyst Layer]

The catalyst layer contains at least the catalyst according to the present embodiment, and may further contain an ionomer.

The ionomer functions as a binder resin in the catalyst layer to be a matrix resin (continuous phase) capable of dispersing and fixing the catalyst according to the present embodiment, and also has a function of conducting ions formed through electrolysis and enhancing the electrolysis efficiency of $CO_2$. The ionomer is preferably conductive, and is more preferably a polymer electrolyte, from the standpoint of enhancing the conductive efficiency of ions formed through electrolysis. It is further preferred that the polymer electrolyte is an ion exchange resin. The ion exchange resin may be either a cation exchange resin or an anion exchange resin, and is preferably an anion exchange resin.

With the use of an anion exchange resin, in particular, the anion exchange resin itself has a function of adsorbing carbon dioxide, which can largely enhance the electrolysis efficiency of carbon dioxide, in cooperation with the high ion conduction of the ion exchange resin.

Examples of the cation exchange resin include a fluorine resin having a sulfone group and a styrene-divinylbenzene copolymer having a sulfone group. A commercially available product may also be used therefor, and examples thereof include Nafion (available from Chemours Company), Aquivion (available from Solvay Specialty Polymers, Inc.), Diaion (available from Mitsubishi Chemical Corporation), and Fumasep (available from Fumatech BWT GmbH).

Examples of the anion exchange resin include a resin having one or more of an ion exchange group selected from the group consisting of a quaternary ammonium group, a primary amino group, a secondary amino group, and a tertiary amino group. A commercially available product may also be used therefor, and examples thereof include Sustainion (available from Dioxide Materials, Inc.), Fumasep (available from Fumatech BWT GmbH), Pention (available from Xergy, Inc.), Durion (available from Xergy, Inc.), Neosepta (available from Astom Corporation), and Toyopearl (available from Tosoh Corporation).

The anion exchange resin preferably has a base site density in a dry state of 2.0 to 5.0 mmol/cm$^3$, more preferably 2.5 mmol/cm$^3$ or more and less than 4.5 mmol/cm$^3$, and further preferably 2.9 mmol/cm$^3$ or more and less than 4.5 mmol/cm$^3$, from the standpoint of enhancing the conductivity.

The base site density of the anion exchange resin can be obtained from the integral value of the signal in $^1$H-NMR measurement of the anion exchange resin.

The dry state of the anion exchange resin means that the anion exchange resin does not contain free water, and for example, the dry state can be obtained by heating the anion exchange resin in vacuum.

In the case where the cathode according to the present embodiment is used in the ion exchange membrane-electrode assembly described later or the solid electrolyte electrolysis apparatus described later, the ionomer used is preferably the same resin as the solid electrolyte (ion exchange membrane) from the standpoint of enhancing the conductivity.

The content of the catalyst according to the present embodiment in the catalyst layer is preferably 50 to 99% by mass, more preferably 75 to 97% by mass, and further preferably 90 to 95% by mass, from the standpoint of further enhancing the electrolytic activity and the $CO_2$ reduction reaction rate.

[Gas Diffusion Layer]

The gas diffusion layer contains, for example, carbon paper or nonwoven fabric, or a metal mesh. Examples thereof include graphite carbon, glassy carbon, titanium, and a stainless steel.

[Ion Exchange Membrane-Electrode Assembly]

The ion exchange membrane-electrode assembly according to the present embodiment includes the cathode according to the present embodiment described above, a solid electrolyte, and an anode.

The ion exchange membrane-electrode assembly according to the present embodiment includes the cathode that includes the catalyst according to the present embodiment, and thereby has a high electrolytic activity and a high $CO_2$

reduction reaction rate.

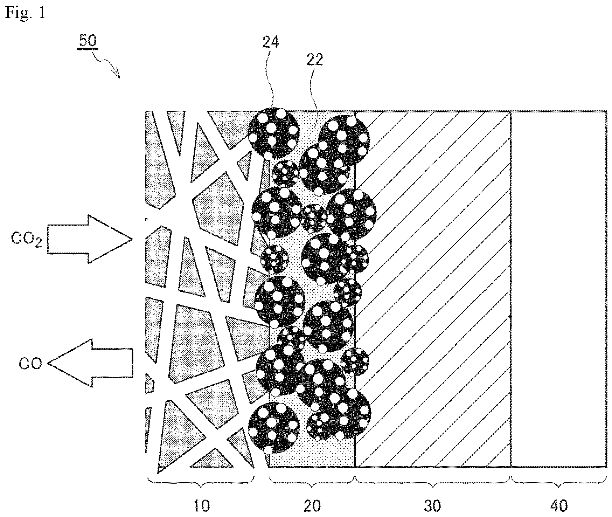

Fig. 1 is a schematic illustration showing an ion exchange membrane-electrode assembly that is favorably used in the present embodiment. Fig. 1 shows an ion exchange membrane-electrode assembly 50 including a gas diffusion layer 10, a catalyst layer 20, a solid electrolyte layer 30, and an anode 40. The catalyst layer 20 contains the multiple catalysts 24 according to the present embodiment, and an ionomer 22. The combination of the gas diffusion layer 10 and the catalyst layer 20 constitutes the cathode according to the present embodiment.

As shown in Fig. 1, carbon dioxide ($CO_2$) is supplied to the catalyst layer 20 via the gas diffusion layer 10, and carbon monoxide (CO) is formed through reduction reaction.

The following description will be made with reference to Fig. 1 while omitting the symbols.

[Solid Electrolyte]

The ion exchange membrane-electrode assembly according to the present embodiment includes a solid electrolyte.

The solid electrolyte used may be a polymer membrane. The polymer used may be various ionomers, and may be a cation exchange resin or an anion exchange resin, and an anion exchange resin is preferred. Accordingly, the solid electrolyte is preferably an anion exchange membrane. The same anion exchange resin as the ionomer used in the catalyst layer described above is more preferably used.

The solid electrolyte used may be a product that is commercially available as a cation exchange membrane or an anion exchange membrane.

In the case where an anion exchange membrane is used as the solid electrolyte, the base site density thereof in a dry state is preferably 0.5 to 5.0 mmol/cm$^3$, more preferably 2.5 mmol/cm$^3$ or more and less than 4.5 mmol/cm$^3$, and further preferably 2.9 mmol/cm$^3$ or more and less than 4.5 mmol/cm$^3$.

Examples of the cation exchange membrane include a strongly acidic cation exchange membrane formed of a fluorine resin as a matrix having a sulfone group introduced thereto, Nafion 117, Nafion 115, Nafion 212, and Nafion 350 (available from Chemours Company), a strongly acidic cation exchange membrane formed of a styrene-divinylbenzene copolymer as a matrix having a sulfone group introduced thereto, and Neosepta CSE (available from Astom Corporation).

Examples of the anion exchange membrane include an anion exchange membrane having one or more ion exchange groups selected from the group consisting of a quaternary ammonium group, a primary amino group, a secondary amino group, and a tertiary amino group. Specific examples thereof include Neosepta (registered trade name) ASE, AHA, ACS, and AFX (available from Astom Corporation), and Selemion (registered trade name) AMVN, DSVN, AAV, ASVN, and AHO (available from AGC Engineering Co., Ltd.).

As for reduction reaction of carbon dioxide, the reduction reaction in the cathode according to the present embodiment varies depending on the kind of the solid electrolyte. In the case where a cation exchange membrane is used as the solid electrolyte, the reduction reaction of the reaction formula (1) and the reaction formula (2) below occurs, and in the case where an anion exchange membrane is used as the solid electrolyte, the reduction reaction of the reaction formula (3) and the reaction formula (4) below occurs.

$$CO_2 + 2H^- + 2e^- => CO + H_2O \qquad (1)$$

$$2H^+ + 2e^- => H_2 \qquad (2)$$

$$H_2O + CO_2 + 2e^- => CO + 2OH^- \qquad (3)$$

$$2H_2O + 2e^- => H_2 + 2OH^- \qquad (4)$$

[Anode]

The oxidation reaction in an anode varies depending on the kind of the solid electrolyte. In the case where a cation exchange membrane is used as the solid electrolyte, the oxidation reaction of the reaction formula (5) occurs, and in the case where an anion exchange membrane is used as the solid electrolyte, the oxidation reaction of the reaction formula (6) occurs.

$$2H_2O => O_2 + 4H^+ + 4e^- \qquad (5)$$

$$4OH^- => O_2 + 2H_2O + 4e^- \qquad (6)$$

The anode is a gas diffusion electrode including the gas diffusion layer.

The gas diffusion layer includes, for example, a metal mesh. Examples of the electrode material of the anode include Ir, $IrO_2$, Ru, $RuO_2$, Co, CoOx, Cu, CuOx, Fe, FeOx, FeOOH, FeMn, Ni, NiOx, NiOOH, NiCo, NiCe, NiC, NiFe, NiCeCoCe, NiLa, NiMoFe, NiSn, NiZn, SUS, Au, and Pt.

<Solid Electrolyte Electrolysis Apparatus>

The solid electrolyte electrolysis apparatus according to the present embodiment includes the cathode according to the present embodiment described above, an anode constituting a pair of electrodes with the cathode, a solid electrolyte intervening between the cathode and the cathode, in a contact state, and a voltage application unit applying a voltage between the cathode and the anode.

The solid electrolyte electrolysis apparatus according to the present embodiment includes the cathode that includes the catalyst according to the present embodiment, and thereby has a high electrolytic activity and a high $CO_2$ reduction reaction rate.

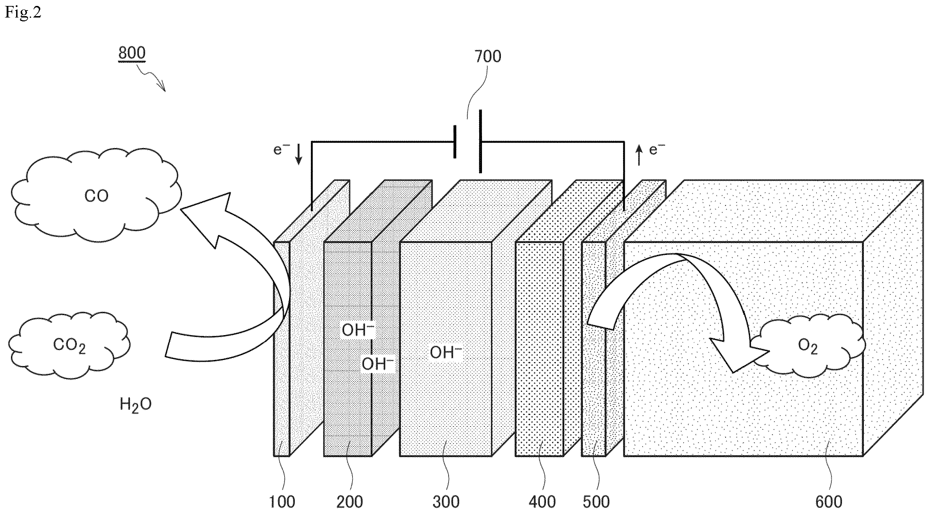

Fig. 2 is a schematic illustration showing a solid electrolyte electrolysis apparatus that is favorably used in the present embodiment.

Fig. 2 shows a solid electrolyte electrolysis apparatus 800 including the cathode 200 according to the present embodiment, an anode 400 constituting a pair of electrodes with the cathode 200, a solid electrolyte 300 intervening between the cathode 200 and the anode 400, in a contact state, and a voltage application unit 700 applying a voltage between the cathode 200 and the anode 400.

The solid electrolyte electrolysis apparatus 800 shown in Fig. 2 further includes a cathode collector 100, an anode collector 500, and an electrolytic solution 600.

The cathode according to the present embodiment described above is used as the cathode 200. The solid electrolyte 300 is the same as the solid electrolyte 30 in Fig. 1, and the solid electrolyte 300 is preferably an anion exchange membrane. The anode 400 is the same as the anode 40 in Fig. 1.

The details of the cathode 200, the solid electrolyte 300, and the anode 400 have been described above.

The components other than the cathode 200, the solid electrolyte 300, and the anode 400 will be described below while omitting the symbols.

[Cathode Collector]

Examples of the cathode collector include a metal material, such as copper (Cu), nickel (Ni), a stainless steel (SUS), a nickel-plated steel, and brass, and among these, copper is preferred from the standpoint of the workability and the cost. Examples of the shape of the cathode collector in the case where the material is a metal material include a metal foil, a metal sheet, a thin metal film, an expanded metal, a punching metal, and a metal foam.

The cathode collector may have provided therein a gas supply hole for supplying the raw material gas containing carbon dioxide to the cathode, and a gas recovery hole for recovering the formed gas containing carbon monoxide. The gas supply hole and the gas recovery hole provided enable the uniform and efficient supply of the raw material gas to the cathode and recovery of the formed gas (including the unreacted raw material gas). Only one or two or more gas supply holes and only one or two or more gas recovery holes may be provided, independently thereon. The shapes, the positions, the sizes, and the like of the gas supply holes and the gas recovery holes are not particularly limited and may be determined appropriately. In addition, in the case where the cathode collector has gas permeability, the gas supply holes and the gas recovery holes may not be necessarily provided.

In the case where the cathode has a function of conducting electrons, the cathode collector may not be necessarily provided.

[Anode Collector]

The anode collector has electroconductivity for receiving electrons from the anode, and preferably has rigidity supporting the anode. From this standpoint, the anode collector used is preferably a metal material, such as titanium (Ti), copper (Cu), nickel (Ni), a stainless steel (SUS), a nickel-plated steel, and brass.

The anode collector may have provided therein a gas flow channel for delivering the raw material gas (such as $H_2O$) to the anode. The gas flow channel provided in the anode collector enables the unform and efficient delivery of the raw material gas to the anode. The number, the shape, the position, the size, and the like of the gas flow channel are not particularly limited and may be determined appropriately.

[Voltage Application Unit]

The voltage application unit has a function of applying a voltage between the cathode and the anode through application of a voltage between the cathode collector and the anode collector. Both collectors are conductors, and therefore electrons are supplied to the cathode, whereas electrons are received from the anode. The voltage application unit may have a control unit, which is not shown in the figure, electrically connected thereto for applying an appropriate voltage.

[Electrolytic Solution]

The electrolytic solution is preferably an aqueous solution having pH of 5 or more.
Examples thereof include a carbonate salt aqueous solution, a hydrogen carbonate salt aqueous solution (such as a $KHCO_3$ aqueous solution), a sulfate salt aqueous solution, a borate salt aqueous solution, sodium hydroxide, a potassium hydroxide aqueous solution, and a sodium chloride aqueous solution.

(Reaction Gas Supply Unit)

The solid electrolyte electrolysis apparatus according to the present embodiment may have a reaction gas supply unit, which is not shown in the figure, outside the solid electrolyte electrolysis apparatus. Specifically, it suffices that $CO_2$ as the reaction gas is supplied to the catalyst layer of the cathode, in which the reaction gas may be supplied from the reaction gas supply unit to the gas supply hole via a pipe, which is not shown in the figure, or the reaction gas may be sprayed on the surface of the cathode collector opposite to the surface thereof in contact with the cathode. The reaction gas used is preferably a factory emission gas emitted from factories, from the environmental standpoint.

[CO Generating Method]

A CO generating method using the solid electrolyte electrolysis apparatus according to the present embodiment will be then described.
$CO_2$ in a gas state, which is a reaction gas as a raw material, is supplied to the solid electrolyte electrolysis apparatus with the reaction gas supply unit, which is not shown in the figure. At this time, $CO_2$ is supplied to the cathode, for example, through the gas supply hole provided in the cathode collector.
Subsequently, $CO_2$ supplied to the cathode is brought into contact with the catalyst layer of the cathode, and thereby the reduction reaction of the reaction formula (1) and the reaction formula (2) described above occurs in the case where a cation exchange membrane is used as the solid electrolyte, or the reduction reaction of the reaction formula (3) and the reaction formula (4) described above occurs in the case where an anion exchange membrane is used as the solid electrolyte, resulting in a synthetic gas containing at least CO and $H_2$ formed.
Subsequently, for example, the synthetic gas containing at least CO and $H_2$ thus formed is supplied to a gas recovery unit, which is not shown in the figure, through the gas recovery hole provided in the cathode collector, and the prescribed gas species are recovered.

Examples

The technique of the present disclosure will be then described with reference to examples, but the technique of the present disclosure is not limited to the examples.

<Production of Catalyst>

[Example 1]

(Mixing Step)

In a beaker, 15 mL of ethanol was mixed with 0.4 g of carbon black 1 having a primary particle diameter of 30 nm (Vulcan (XC-72) (available from Cabot Corporation)) as a carrier, 1.1 mmol of pentaethylenehexamine, and 0.7 mmol of nickel(II) chloride hexahydrate, and the resulting ethanol dispersion liquid was irradiated with ultrasonic wave for 10 minutes. Thereafter, ethanol was evaporated through drying by heating.
The primary particle diameter of the carbon black was obtained through laser diffraction particle size distribution measurement.

(Baking Step)

The resulting powder was baked by heating in an inert gas at 900°C for 30 seconds or more with an electric furnace.

(Rinsing Step)

The baked material taken out from the quartz tube was dispersed in pure water with a homogenizer, and then the baked material was rinsed with 2 M sulfuric acid at 80°C for 3 hours. The baked material was rinsed with pure water, and then dried to provide a catalyst of Example 1.

[Example 2]

A catalyst of Example 2 was produced in the same manner as in the production of the catalyst of Example 1 except that carbon black 2 having a primary particle diameter of 15 nm (BLACKPEARL 2000 (available from Cabot Corporation)) was used instead of the carbon black 1 having a primary particle diameter of 30 nm.

[Comparative Example 1]

A catalyst of Comparative Example 1 was produced in the same manner as in the production of the catalyst of Example 1 except that graphene oxide having a primary particle diameter of 2,000 nm to 25,000 nm was used as the carrier instead of the carbon black 1, the amount of pentaethylenehexamine was changed from 1.1 mmol to 6 mmol, and the amount of nickel(II) chloride hexahydrate was changed from 0.7 mmol to 4 mmol.

[Comparative Example 2]

A catalyst of Comparative Example 2 was produced in the same manner as in the production of the catalyst of Example 1 except that Ketjen Black EC-600JD having a primary particle diameter of 30 nm (available from Lion Specialty Chemicals Co., Ltd.) was used as the carrier instead of the carbon black 1.

[Comparative Example 3]

A catalyst of Comparative Example 3 was produced in the same manner as in the production of the catalyst of Example 1 except that Ketjen Black EC-600JD having a primary particle diameter of 30 nm (available from Lion Specialty Chemicals Co., Ltd.) was used as the carrier instead of the carbon black 1, the amount of pentaethylenehexamine was changed from 1.1 mmol to 5.5 mmol, and the amount of nickel(II) chloride hexahydrate was changed from 0.7 mmol to 3.5 mmol.

[Example 3]

(Mixing Step)

In a beaker, 15 mL of ethanol was mixed with 0.4 g of Ketjen Black having a primary particle diameter of 30 nm (available from Lion Specialty Chemicals Co., Ltd.) as a carrier, 5.5 mmol of pentaethylenehexamine, and 3.5 mmol of nickel (II) chloride hexahydrate, and the resulting ethanol dispersion liquid was irradiated with ultrasonic wave for 10 minutes. Thereafter, ethanol was evaporated through drying by heating.

(Baking Step)

The resulting powder was baked by heating in an inert gas at 900°C for 30 seconds or more with an electric furnace.

(Pulverizing Step)

The baked material obtained in the baking step was pulverized with alumina balls having a diameter of 3 mm at 800 rpm for 5 minutes.

(Rinsing Step)

The baked material was dispersed in pure water with a homogenizer, and then the baked material was rinsed with 2 M sulfuric acid at 80°C for 3 hours. The baked material was rinsed with pure water, and then dried to provide a catalyst of Example 3.

<Evaluation of Characteristics of Catalyst>

(Particle Diameter of Catalyst)

The resulting catalysts of Examples 1 to 3 and Comparative Examples 1 to 3 each were dispersed in ethanol, and after irradiating the dispersion liquid with ultrasonic wave for 30 minutes, the particle diameter distribution of the catalyst was measured with a laser diffraction-scattering particle diameter distribution analyzer ("Partica LA-960V2", available from Horiba, Ltd.). The results are shown in Table 1.

(Content of Catalyst Source coordinated to Nitrogen Atom)

The total content of a Ni ion and Ni metal in each of the catalysts of Examples 1 to 3 and Comparative Examples 1 to 3 was measured by XRF ("NEX DE", available from Rigaku Corporation), and as for the form of Ni supported, the content ratio of the Ni ion bonded to the nitrogen atom and the Ni metal fine particles was measured by XAFS (transmission method).

The content ratio of the Ni ion bonded to the nitrogen atom was calculated from the measurement results, and shown in the column "Content of Ni ion coordinated to nitrogen atom" in Table 1.

<Solid Electrolyte Electrolysis Apparatus>

[Example 1]

The catalyst of Example 1 was dispersed in an ethanol solution, and mixed with "Nafion (registered trade name)", available from Chemours Company (cation exchange resin) as an ionomer. The resulting dispersion liquid was coated on carbon paper to provide a cathode. The cathode had the coated film of the dispersion liquid as a catalyst layer, and the carbon paper as a gas diffusion layer.

The above-mentioned cathode was adhered with the anion exchange membrane having a thickness of approximately 30 $\mu$m (base site density: 2.8 mmol/cm$^3$), and an anode produced by supporting iridium oxide on a titanium mesh (available from Taiyo Wire Cloth Co., Ltd., aperture ratio: 56%), so as to provide an ion exchange membrane-electrode assembly.

The anode had a structure in contact with an electrolytic solution (KHCO$_3$ solution of 0.5 mol/L) tank.

[Examples 2 and 3 and Comparative Examples 1 to 3]

Solid electrolyte electrolysis apparatuses of Examples 2 and 3 and Comparative Examples 1 to 3 were produced in the same manner as in the production of the solid electrolyte electrolysis apparatus of Example 1 except that the catalyst was changed from the catalyst of Example 1 to any of the catalyst of Examples 2 and 3 and Comparative Examples 1 to 3.

[Example 4]

The catalyst of Example 3 was dispersed in an ethanol solution, and mixed with "Nafion (registered trade name)", available from Chemours Company (cation exchange resin) as an ionomer. The resulting dispersion liquid was coated on carbon paper to provide a cathode. The cathode had the coated film of the dispersion liquid as a catalyst layer, and the carbon paper as a gas diffusion layer.

The above-mentioned cathode was adhered with the anion exchange membrane having a thickness of approximately 30 $\mu$m (base site density: 2.1 mol/cm$^3$), and a carbon anode having iridium oxide supported thereon (available from Dioxide Materials, Inc.), so as to provide an ion exchange membrane-electrode assembly.

The anode had a structure in contact with an electrolytic solution (KHCO$_3$ solution of 0.5 mol/L) tank.

[Comparative Example 4]

The catalyst of Comparative Example 1 was dispersed in an ethanol solution, and mixed with "Nafion (registered trade name)", available from Chemours Company (cation exchange resin) as an ionomer. The resulting dispersion liquid was coated on carbon paper to provide a cathode. The cathode had the coated film of the dispersion liquid as a catalyst layer, and the carbon paper as a gas diffusion layer.

The above-mentioned cathode was adhered with the anion exchange membrane having a thickness of approximately 30 μm (base site density: 2.1 mol/cm$^3$), and a carbon anode having iridium oxide supported thereon (available from Dioxide Materials, Inc.), so as to provide an ion exchange membrane-electrode assembly.

The anode had a structure in contact with an electrolytic solution (KHCO$_3$ solution of 0.5 mol/L) tank.

<Evaluation of Solid Electrolyte Electrolysis Apparatus>

[Examples 1 to 3 and Comparative Examples 1 to 3]

(Current Density)

In each of the solid electrolyte electrolysis apparatuses of Examples 1 to 3 and Comparative Examples 1 to 3, CO$_2$ was electrolyzed by supplying pure CO$_2$ at a flow rate of 60 sccm to the cathode with an application potential of the cathode set to -1.8 V with respect to the silver/silver chloride reference electrode, and the current density (mA/cm$^2$) in forming CO was measured.

The results are shown in Table 1.

(CO Selectivity)

The synthetic gas obtained in the measurement of the current density was subjected to gas analysis by gas chromatography, and the selectivity of carbon monoxide was calculated according to the following expression.

$$CO \text{ selectivity } (\%) =$$
$$((CO \text{ formation rate (mol/s)} \times \text{Faraday constant} \times 2)/\text{total current (A)}) \times 100$$

(Faraday constant = 96485.3329 sA/mol)

The results are shown in Table 1.

(Evaluation)

The evaluation results of the solid electrolyte electrolysis apparatuses of Examples 1 to 3 and Comparative Examples 1 to 3 were judged according to the following standard.

A: The current density was 250 mA/cm$^2$ or more.
B: The current density was 200 mA/cm$^2$ or more and less than 250 mA/cm$^2$.
C: The current density was 100 mA/cm$^2$ or more and less than 200 mA/cm$^2$.
D: The current density was less than 100 mA/cm$^2$.

Table 1

| | Primary particle diameter of conductive carrier | Particle diameter of catalyst | Content of Ni ion coordinated to nitrogen atom | Potential | Current density | Judgment | CO selectivity |
|---|---|---|---|---|---|---|---|
| | nm | nm | % by mass | | mA/cm$^{-2}$ | - | % |
| Example 1 | 30 | 30 - 20,000 | 0.9 | -1.8 Vvs. Ag/AgCl | 280 | A | 90 < |
| Example 2 | 15 | 30 - 20,000 | 0.7 | -1.8 Vvs. Ag/AgCl | 230 | B | 90 < |
| Example 3 | 30 | 2,000 - 40,000 | 1.1 | -1.8 Vvs. Ag/AgCl | 290 | A | 90 < |

(continued)

| | Primary particle diameter of conductive carrier | Particle diameter of catalyst | Content of Ni ion coordinated to nitrogen atom | Potential | Current density | Judgment | CO selectivity |
|---|---|---|---|---|---|---|---|
| | nm | nm | % by mass | | mA/cm$^{-2}$ | - | % |
| Comparative Example 1 | 2,000 - 25,000 | 2,000 - 25,000 | 2 | -1.8 Vvs. Ag/AgCl | 85 | D | 90 < |
| Comparative Example 2 | 30 | 70 - 30,000 | 0.5 | -1.8 Vvs. Ag/AgCl | 170 | C | 90 < |
| Comparative Example 3 | 30 | 4,000 - 100,000 | 1.1 | -1.8 Vvs. Ag/AgCl | 150 | C | 90 < |

<Evaluation of Solid Electrolyte Electrolysis Apparatus>

[Example 4 and Comparative Example 4]

(Current Density)

In each of the solid electrolyte electrolysis apparatuses of Example 4 and Comparative Example 4, $CO_2$ was electrolyzed by supplying pure $CO_2$ at a flow rate of 60 sccm to the cathode with an application potential of the cathode set to -3 V with respect to the anode under condition where the solid electrolyte electrolysis apparatus was heated to 50°C, and the current density (mA/cm$^2$) in forming CO was measured.
The results are shown in Table 2.

(CO Selectivity)

The synthetic gas obtained in the measurement of the current density was subjected to gas analysis by gas chromatography, and the selectivity of carbon monoxide was calculated according to the following expression.

$$\text{CO selectivity (\%)} =$$

$$((\text{CO formation rate (mol/s)} \times \text{Faraday constant} \times 2)/\text{total current (A)}) \times 100$$

(Faraday constant = 96485.3329 sA/mol)
The results are shown in Table 2.

Table 2

| | Primary particle diameter of conductive carrier | Particle diameter of catalyst | Content of Ni ion coordinated to nitrogen atom | Potential | Current density | CO selectivity |
|---|---|---|---|---|---|---|
| | nm | nm | % by mass | | mA/cm$^{-2}$ | % |
| Example 4 | 30 | 2,000 - 40,000 | 1.1 | -3V vs. CE | 750 | 90 < |
| Comparative Example 4 | 2,000 - 25,000 | 2,000 - 25,000 | 2 | -3V vs. CE | 160 | 10 > |

It is understood from Table 1 that Comparative Examples 1 to 3 each have a CO selectivity exceeding 90% as similar to Examples 1 to 3, but the solid electrolyte electrolysis apparatuses of Comparative Example 1 having a primary particle diameter of the carrier exceeding 200 nm, Comparative Example 2 having a content of the Ni ion coordinated to the nitrogen atom of less than 0.7% by mass, and Comparative Example 3 having a particle diameter of the catalyst exceeding 50 μm each result in a small current density.

In Table 2, the solid electrolyte electrolysis apparatus of Comparative Example 4 using the same catalyst as in Comparative Example 1 results in a CO selectivity that is as small as less than 10%, and also results in a small current density.

On the other hand, the solid electrolyte electrolysis apparatuses of Examples 1 to 4 produced with the catalysts according to the present embodiment having a high electrolytic activity and a high $CO_2$ reduction reaction rate each result in a CO selectivity exceeding 90% and a high current density.

Industrial Applicability

In the solid electrolyte electrolysis apparatus according to the present embodiment, for example, $CO_2$ gas emitted from factories is used as a raw material, and renewable energy, such as solar battery, to the voltage application unit, is used , whereby a synthetic gas containing at least CO and $H_2$ at a desired formation ratio can be produced. The synthetic gas produced in this manner can produce fuel substrates, chemical raw materials, and the like through the measures, such as FT synthesis (Fischer-Tropsch synthesis) or methanation.

Reference Sign List

10: gas diffusion layer
20: catalyst layer
22: ionomer
24: catalyst
30: solid electrolyte (ion exchange membrane)
40: anode
50: ion exchange membrane-electrode assembly
100: cathode collector
200: cathode
300: solid electrolyte (ion exchange membrane)
400: anode
500: anode collector
600: electrolytic solution
700: voltage application unit
800: solid electrolyte electrolysis apparatus

**Claims**

1. A catalyst comprising

    a metal ion selected from the group consisting of a copper ion, a nickel ion, an iron ion, a cobalt ion, a zinc ion, a manganese ion, a molybdenum ion, and an aluminum ion,
    a nitrogen-containing compound, and
    a carrier containing carbon having a primary particle diameter of 5 to 200 nm,
    the metal ion being coordinated to a nitrogen atom on the nitrogen-containing compound,
    the catalyst having a content of the metal ion coordinated to the nitrogen atom of 0.7% by mass or more,
    the catalyst having a particle diameter of 10 nm to 50 $\mu$m.

2. A cathode comprising a catalyst layer containing the catalyst according to claim 1, and a gas diffusion layer.

3. An ion exchange membrane-electrode assembly comprising the cathode according to claim 2, a solid electrolyte, and an anode.

4. The ion exchange membrane-electrode assembly according to claim 3, wherein the solid electrolyte is an anion exchange membrane.

5. A solid electrolyte electrolysis apparatus comprising

the cathode according to claim 2,
an anode constituting a pair of electrodes with the cathode,
a solid electrolyte intervening between the cathode and the cathode, in a contact state, and
a voltage application unit applying a voltage between the cathode and the anode.

6. The solid electrolyte electrolysis apparatus according to claim 5, wherein the solid electrolyte is an anion exchange membrane.

7. A method of producing the catalyst according to claim 1 comprising

a mixing step of mixing a metal ion selected from the group consisting of a copper ion, a nickel ion, an iron ion, a cobalt ion, a zinc ion, a manganese ion, a molybdenum ion, and an aluminum ion, a nitrogen-containing compound, and a carrier containing carbon having a primary particle diameter of 5 to 200 nm, so as to provide a mixture, and
a baking step of baking the mixture, so as to provide a baked material.

Fig. 1

Fig.2

## INTERNATIONAL SEARCH REPORT

| International application No. |
|---|
| **PCT/JP2023/006499** |

**A. CLASSIFICATION OF SUBJECT MATTER**

*C25B 11/085*(2021.01)i; *B01J 27/24*(2006.01)i; *C01B 32/40*(2017.01)i; *C25B 1/23*(2021.01)i; *C25B 9/23*(2021.01)i; *C25B 11/02*(2021.01)i; *C25B 11/054*(2021.01)i; *C25B 11/065*(2021.01)i; *C25B 13/04*(2021.01)i

FI: C25B11/085; C25B11/054; C25B11/065; C25B11/02 304; C25B1/23; C25B9/23; C25B13/04 301; B01J27/24 M; C01B32/40

According to International Patent Classification (IPC) or to both national classification and IPC

**B. FIELDS SEARCHED**

Minimum documentation searched (classification system followed by classification symbols)

C25B11/085; B01J27/24; C01B32/40; C25B1/23; C25B9/23; C25B11/02; C25B11/054; C25B11/065; C25B13/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | XU, Li, et al. "Electrocatalytic activity of CoPy/C catalyst for the Oxygen reduction reaction in Alkaline Electrolyte". CTA PHYS. - CHIM. SIN. 18 August 2011, vol. 27, mo. 10, pp. 2251-2254<br>p. 2252, left column, line 33 to p. 2254, left column, line 11 | 1, 7 |
| Y | | 2-6 |
| Y | JP 2021-138994 A (ENEOS CORP) 16 September 2021 (2021-09-16)<br>paragraphs [0035], [0039]-[0043], [0057]-[0070] | 2-6 |
| A | JP 2018-141227 A (PANASONIC INTELLECTUAL PROPERTY MANAGEMENT CO., LTD.) 13 September 2018 (2018-09-13)<br>entire text, all drawings | 1-7 |
| A | JP 2017-210638 A (TOYO INK SC HOLDINGS CO., LTD.) 30 November 2017 (2017-11-30)<br>entire text | 1-7 |

☑ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/006499**

### C. DOCUMENTS CONSIDERED TO BE RELEVANT

| Category* | Citation of document, with indication, where appropriate, of the relevant passages | Relevant to claim No. |
|---|---|---|
| A | 久英之. 「導電性カーボンブラックの現状」. 日本印刷学会誌. 2007, vol. 44, no. 3, pp. 133-143, (HISASHI, Hideyuki. Current State of Electroconductive Carbonblack. Journal of Printing Science and Technology.)<br>table 4 | 1-7 |

## INTERNATIONAL SEARCH REPORT
### Information on patent family members

International application No.

**PCT/JP2023/006499**

| Patent document cited in search report | | | Publication date (day/month/year) | Patent family member(s) | Publication date (day/month/year) |
|---|---|---|---|---|---|
| JP | 2021-138994 | A | 16 September 2021 | (Family: none) | |
| JP | 2018-141227 | A | 13 September 2018 | US 2018/0142365 A1 whole document | |
| JP | 2017-210638 | A | 30 November 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUN JIANG ; SAMIRA SIAHROSTAMI ; TINGTING ZHENG ; YONGFENG HU ; SOOYEON HWANG ; ELI STAVITSKI ; YANDE PENG ; JAMES DYNES ; MEHASH GANGISETTY ; DONG SU**. *Energy Environ. Sci.*, 2018, vol. 11, 893-903

- **PANPAN SU ; KAZUYUKI IWASE ; SHUJI NAKANISHI ; KAZUHITO HASHIMOTO ; KAZUHIDE KAMIYA**. *small*, 2016, vol. 12 (44), 6083-6089